# EUROPÄISCHE PATENTSCHRIFT

(11) **EP 2 419 467 B1**
(45) Veröffentlichungstag und Bekanntmachung des Hinweises auf die Patenterteilung: **26.06.2019**
(21) Anmeldenummer: 10713339.9
(22) Anmeldetag: 12.04.2010
(51) Int. Cl.: C08G 18/08, C08G 18/12, C08G 18/22, C08G 18/28, C08G 18/48, C08G 18/73, C09D 175/04, C14C 11/00

(54) **SPHÄRISCHE POLYURETHAN-PARTIKEL UND IHRE VERWENDUNG**
SPHERICAL POLYURETHANE PARTICLES AND THEIR USE.
PARTICULES SPHÉRIQUES DE POLYURÉTHANE ET LEUR UTILISATION.

(30) Priorität: 16.04.2009 EP 09158007
(43) Veröffentlichungstag der Anmeldung: 22.02.2012
(73) Patentinhaber: Stahl International B.V., 5145 PE Waalwijk (NL)
(72) Erfinder: ADAMS, Stefan, 67065 Ludwigshafen (DE); BÜLOW, Gerd, 67133 Maxdorf (DE); HÄBERLE, Karl, 67346 Speyer (DE); HECKHOFF, Lars, 69517 Gorxheimertal (DE); KÖHLER, Reinhard, 67378 Zeiskam (DE); SCHEIDL, Helfried, 67159 Friedelsheim (DE); TREIBER, Reinhard, 69181 Leimen (DE); FRECHEN, Thomas, 69120 Heidelberg (DE)
(74) Vertreter: V.O.
(86) Internationale Anmeldenummer: PCT/EP2010/054742
(87) Internationale Veröffentlichungsnummer: WO 2010/119002

(56) Entgegenhaltungen:
- WO-A1-03/095517
- US-A- 4 520 071
- SHANTHA K L ET AL: "DRUG-RELEASE BEHAVIOR OF POLYURETHANE MICROSPHERES" JOURNAL OF APPLIED POLYMER SCIENCE, JOHN WILEY AND SONS INC. NEW YORK, US LNKD- DOI:10.1002/APP.1993.070501102, Bd. 50, Nr. 11, 15. Dezember 1993 (1993-12-15), Seiten 1863-1870, XP000461010 ISSN: 0021-8995

## Beschreibung

Die vorliegende Erfindung betrifft sphärische Partikel mit einem mittleren Durchmesser (Volumenmittel) im Bereich von 1 bis 100 µm, umfassend mindestens ein organisches Polymer, wobei die Partikel eine oder mehrere offene Poren aufweisen, die einen Durchmesser im Bereich von 1 bis 90% des Partikeldurchmessers und eine Tiefe von mindestens 10% des Partikeldurchmessers aufweisen, worin, dass organische Polymer gewählt wird aus Polyurethanen, die Harnstoffgruppen aufweisen und die im Wesentlichen unter Verwendung von aliphatischen oder cycloaliphatischen Diisocyanaten hergestellt sind.

Weiterhin betrifft die vorliegende Erfindung die Verwendung von erfindungsgemäßen sphärischen Partikeln zur Beschichtung von Substraten.

Weiterhin betrifft die vorliegende Erfindung ein Verfahren zur Herstellung von speziellen sphärischen Partikeln.

Viele filmförmige Beschichtungen von Substraten, beispielsweise von Metall, Kunststoffe oder von faserigen Substraten, beispielsweise Holz, Textil oder Leder, sind glänzend. In einzelnen Anwendungen sind jedoch matte Beschichtungen gefragt, insbesondere dann, wenn Reflektionen störend wirken. Beispiele im Falle von Leder sind Polsterleder und Automobilinnenteile. Insbesondere auf den Armaturenbrettern sind glänzende Leder unerwünscht, weil sie bei Sonnenschein zum Reflektieren neigen.

Eine Mattierung lässt sich beispielsweise erreichen, indem man der Beschichtungsmischung Partikel beimischt. Dabei wird auf einen starken Mattierungseffekt Wert gelegt. Somit besteht eine erhebliche Nachfrage nach Partikeln, die einen starken Mattierungseffekt aufweisen.

Mattierte Flächen sollen dabei gleichzeitig einen angenehmen Griff haben, also eine angenehme Haptik.

In WO 03/095517 werden Partikel offenbart, die Polyurethan umfassen, die aus mindestens einem Diisocyanat, das keine lateralen Alkylgruppen trägt, und mindestens zwei verschiedenen Diolen aufgebaut sind, von denen das eine makromolekular ist und das andere nicht, und die sich zum Mattieren eignen. Ihr Mattierungseffekt ist jedoch in einigen Fällen noch nicht stark genug und lässt sich verbessern.

Es bestand also die Aufgabe, Partikel bereit zu stellen, die sich besonders gut zum Mattieren eignen. Weiterhin bestand die Aufgabe, stark mattierte Substrate bereit zu stellen. Weiterhin bestand die Aufgabe, Verfahren zur Herstellung von Partikeln bereit zu stellen, die stark mattierende Effekte haben. Schließlich bestand die Aufgabe, Verwendungen für Partikel mit stark mattierenden Eigenschaften bereit zu stellen. Dementsprechend wurden die eingangs definierten Partikel gefunden, die im Folgenden auch als erfindungsgemäße Partikel bezeichnet werden.

Erfindungsgemäße Partikel sind sphärisch. Unter sphärischen Partikeln werden im Rahmen der vorliegenden Erfindung kugelförmige oder im Wesentlichen kugelförmige Partikel verstanden, bei denen Durchmesser an der breitesten Stelle und Durchmesser an der engsten Stelle maximal 20%, bevorzugt maximal 15% voneinander abweichen. Besonders bevorzugt handelt es sich um kugelförmige Partikel.

Erfindungsgemäße Partikel weisen einen mittleren Durchmesser (Volumenmittel) im Bereich von 1 bis 100 µm auf, bevorzugt 1 bis 50 µm, gemessen mit Hilfe der Laserbeugung.

In einer Ausführungsform der vorliegenden Erfindung weisen erfindungsgemäße Partikel eine enge Partikeldurchmesserverteilung auf, beispielsweise ein Verhältnis des Durchmessers (Gewichtsmittel) zu Durchmesser (Zahlenmittel) im Bereich von 3 zu 1 bis 1,5 zu 1 oder weniger.

In einer anderen Ausführungsform der vorliegenden Erfindung weisen erfindungsgemäße Partikel eine breite Partikeldurchmesserverteilung auf, beispielsweise ein Verhältnis des Durchmessers (Gewichtsmittel) zu Durchmesser (Zahlenmittel) im Bereich von 10 zu 1 oder mehr bis 3,1 zu 1.

In einer Ausführungsform der vorliegenden Erfindung weisen erfindungsgemäße Partikel eine monomodale Partikeldurchmesserverteilung auf. In einer anderen Ausführungsform der vorliegenden Erfindung können erfindungsgemäße Partikel eine bimodale oder multimodale Partikeldurchmesserverteilung aufweisen.

Erfindungsgemäße Partikel weisen eine oder mehrere Poren auf, die einen Durchmesser im Bereich von 1 bis 90% des Partikeldurchmessers, bevorzugt 2 bis 80 %, ermittelbar beispielsweise durch mikroskopische Bestimmungen. Besonders geeignete Bestimmungsmethode ist die Elektronenmikroskopie an repräsentativen Proben, beispielsweise an Proben von mindestens 50 Partikeln.

Die Poren weisen eine Tiefe von mindestens 10% des Partikeldurchmessers auf, wie beispielsweise durch mikroskopische Messungen ermittelt werden kann.

In einer Ausführungsform der vorliegenden Erfindung können erfindungsgemäße Partikel im Mittel (Zahlenmittel) ein bis 100, bevorzugt bis 25 Poren, besonders bevorzugt 2 bis 20 Poren pro Partikel aufweisen.

Bei den Poren handelt es sich um offene Poren.

In einer Ausführungsform der vorliegenden Erfindung haben erfindungsgemäße Partikel im Wesentlichen gleich offene viele Poren pro Partikel. In einer anderen Ausführungsform der vorliegenden Erfindung weicht die Zahl der offenen Poren pro Partikel stark von dem Mittelwert ab, beispielsweise um den Faktor 5 bis 10 oder mehr.

Die Form von Poren von erfindungsgemäßen Partikeln kann regelmäßig oder unregelmäßig sein. Vorzugsweise ist die Form von offenen Poren der erfindungsgemäßen Partikeln regelmäßig. In einer Ausführungsform der vorliegenden Erfindung können Poren eine im Wesentlichen zylindrische oder konische Form aufweisen. In einer anderen Ausführungsform der vorliegenden Erfindung können Poren Hinterschneidungen gleichen, das heißt, dass sie eine kleine Öffnung haben und sich die Kavität unter der Öffnung erweitert.

In einer Ausführungsform der vorliegenden Erfindung sind die Poren von erfindungsgemäßen Partikeln gleichförmig. In einer anderen Ausführungsform der vorliegenden Erfindung können die Poren von erfindungsgemäßen Partikeln unterschiedliche Form annehmen, beispielsweise können erfindungsgemäße Partikel konische und zylindrisch geformte Poren aufweisen.

In einer Ausführungsform der vorliegenden Erfindung weisen erfindungsgemäße Partikel ausschließlich solche Poren auf, wie sie vorstehend beschrieben sind. In einer anderen Ausführungsform der vorliegenden Erfindung können erfindungsgemäße Partikel zusätzlich Poren aufweisen, die von den Poren gemäß den vorstehenden Absätzen in Form und oder Größe abweichen.

In einer Ausführungsform der vorliegenden Erfindung können erfindungsgemäße Partikel zusätzlich zu den offenen Poren auch eine oder mehrere geschlossene Poren aufweisen.

Erfindungsgemäße Partikel umfassen mindestens ein organisches Polymer.

Dass organisches Polymer wird gewählt aus Polyurethanen , die neben Urethangruppen auch Harnstoffgruppen aufweisen.

In einer Ausführungsform der vorliegenden Erfindung werden Polyurethane aus solchen gewählt, die insgesamt im Bereich von 0,01 bis 10, bevorzugt im Bereich von 0,02 bis 5 weitere Harnstoffgruppen, pro Urethangruppe aufweisen (Zahlenmittel).

In einer Ausführungsform der vorliegenden Erfindung werden Polyurethane aus solchen gewählt, die Monoalkylpolyalkylenoxidgruppen aufweisen. Monoalkylpolyalkylenoxide sind üblicherweise durch Alkoxylierung von niedermolekularen einwertigen Startermolekülen, insbesondere von C₁-C₁₀-Alkanolen, wie Methanol, Ethanol oder n-Butanol erhältlich, wobei als Alkoxylierungsmittel vorzugsweise Ethylenoxid oder Gemische von Ethylenoxid mit anderen Alkylenoxiden, insbesondere Propylenoxid, eingesetzt werden, und lassen sich während der Polyurethansynthese in Polyurethane einbauen. Eingesetztes Monoalkylpolyalkylenoxid weist vorzugsweise ein zahlenmittleres Molekulargewicht von 250 bis 10.000 g/mol auf, besonders bevorzugt von 400 bis 5.000 g/mol.

Ein weiterer Gegenstand der vorliegenden Erfindung sind wässrige Dispersionen, enthaltend erfindungsgemäße Partikel.

In einer Ausführungsform der vorliegenden Erfindung enthalten erfindungsgemäße wässrige Dispersionen im Bereich von 5 bis 60 Gew.-% erfindungsgemäße Partikel.

In einer Ausführungsform der vorliegenden Erfindung enthalten erfindungsgemäße wässrige Dispersionen zusätzlich zu erfindungsgemäßen Partikeln solche Partikel, die keine Poren mit einem Durchmesser im Bereich von 1 bis 90% des Partikeldurchmessers und eine Tiefe von mindestens 10% des Partikeldurchmessers aufweisen.

In einer Ausführungsform der vorliegenden Erfindung enthalten erfindungsgemäße wässrige Dispersionen zusätzlich zu erfindungsgemäßen Partikeln solche Partikel, die einen Durchmesser im Bereich von 50 nm bis unter einem Mikrometer aufweisen.

In einer Ausführungsform der vorliegenden Erfindung enthalten erfindungsgemäße wässrige Dispersionen zusätzlich zu erfindungsgemäßen Partikeln solche Partikel, die einen Durchmesser im Bereich von 50 nm bis unter einem Mikrometer aufweisen, und weiterhin solche Partikel, die keine Poren mit einem Durchmesser im Bereich von 1 bis 90% des Partikeldurchmessers und eine Tiefe von mindestens 10% des Partikeldurchmessers aufweisen.

In einer Ausführungsform der vorliegenden Erfindung enthalten erfindungsgemäße wässrige Dispersionen zusätzlich zu erfindungsgemäßen Partikeln solche Partikel, die einen Durchmesser im Bereich von 50 nm bis unter einem Mikrometer aufweisen und die keine Poren mit einem Durchmesser im Bereich von 1 bis 90% des Partikeldurchmessers und eine Tiefe von mindestens 10% des Partikeldurchmessers aufweisen.

Die zusätzlich zu erfindungsgemäßen Partikeln in erfindungsgemäßen wässrigen Dispersionen enthaltenen Partikel sind vorzugsweise jeweils aus organischem Polymer. Besonders bevorzugt sind sie aus dem gleichen oder im Wesentlichen gleichen Polymer wie erfindungsgemäße Partikel auch.

Im Rahmen der vorliegenden Erfindung können im Wesentlichen gleiche Polymere voneinander in der Zusammensetzung abweichen, beispielsweise in den relativen Anteilen der eingebauten Comonomere oder im Molekulargewicht des betreffenden organischen Polymers.

Wenn erfindungsgemäße wässrige Dispersionen neben erfindungsgemäßen Partikeln zusätzliche Partikel enthalten, haben sie vorzugsweise einen Feststoffgehalt im Bereich von insgesamt 5 bis 80 Gew.-%.

Wenn erfindungsgemäße wässrige Dispersionen neben erfindungsgemäßen Partikeln zusätzliche Partikel enthalten, so ist es bevorzugt, dass der Anteil an erfindungsgemäßen Partikeln mindestens 10 Gew.-%, bevorzugt mindestens 20 Gew.-%, besonders bevorzugt mindestens 30 Gew.-% und ganz besonders bevorzugt mindestens 40 Gew.-% beträgt, bezogen auf Gesamtmenge der in erfindungsgemäßer wässriger Dispersion enthaltenen Partikel.

In einer Ausführungsform der vorliegenden Erfindung können erfindungsgemäße wässrige Dispersionen noch einen oder mehrere Zuschlagstoffe enthalten, beispielsweise Biozide, filmbildende (Co)polymere (Bindemittel), Verdicker oder Tenside.

Geeignete Biozide sind beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT"). Im Allgemeinen sind 10 bis 150 ppm Biozid ausreichend, bezogen auf gesamte erfindungsgemäße wässrige Dispersion.

Geeignete Bindemittel sind beispielsweise filmbildende Polyacrylate und Polyurethane, beispielsweise solche Polyacrylate, die (Meth)acrylsäure einpolymerisiert enthalten und mindestens ein Comonomer wie N-Methylol(meth)acrylamid, Glycidyl(meth)acrylamid oder Acetoacetyl(meth)acrylat. Beispiele für besonders geeignete Bindemittel finden sich in WO 2003/23071. Beispiele für geeignete Polyurethane finden sich in EP-A 0 437 742 und in DE-A 42 31 034.

Geeignete Verdicker sind beispielsweise vernetzbare Copolymere auf Basis von Acrylsäure und Acrylamid sowie Verdickungsmittel auf Basis von Polyurethan oder Polyvinylpyrrolidon oder Acrylat(co)polymerisaten. Weiterhin sind sogenannte Assoziativverdicker geeignet, beispielweise auf Basis hydrophob/hydrophil-gebauter Polyurethane, Polyharnstoffe und Polyetherpolyole.

Bevorzugte Beispiele für Verdicker sind Copolymere mit 85 bis 95 Gew.-% Acrylsäure, 4 bis 14 Gew.-% Acrylamid und gegebenenfalls bis 1 Gew.-%, bevorzugt 0,01 bis 0,5 Gew.-% eines (Meth)acrylamidderivats der Formel I 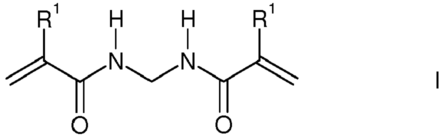 mit Molekulargewichten M_{w} im Bereich von 100.000 bis 200.000 g/mol, in denen R¹ gewählt wird aus Methyl und vorzugsweise Wasserstoff.

Weitere geeignete Bestandteile können ein oder mehrere Tenside sein, die anionisch, kationisch, zwitterionisch oder vorzugsweise nicht-ionisch sein können.

Geeignete anionische Tenside sind z.B. Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Tenside sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Geeignete nicht-ionische Tenside sind z.B. ethoxylierte Mono-, Di- und Tri-Alkylphenole (Ethoxylierungsgrad: 3 bis 50, Alkylrest: C₄-C₁₂) sowie ethoxylierte Fettalkohole (Ethoxylierungsgrad: 3 bis 80; Alkylrest: C₈-C₃₆). Beispiele sind die Lutensol®-Marken der BASF SE und die Triton®-Marken der Union Carbide.

In einer bevorzugten Ausführungsform der vorliegenden Erfindung enthalten erfindungsgemäße wässrige Dispersionen einen oder mehrere weitere Bestandteile, beispielsweise Harnstoff-Formaldehyd-Kondensate, Melamin-Formaldehyd-Harze, Eiweiß oder Füllstoffe auf anorganischer oder vorzugsweise organischer Basis.

In einer Ausführungsform der vorliegenden Erfindung können erfindungsgemäße wässrige Dispersionen ein oder mehrere Pigmente enthalten, bevorzugt ein oder mehrere Schwarzpigmente.

In einer bevorzugten Ausführungsform der vorliegenden Erfindung enthalten erfindungsgemäße wässrige Dispersionen weniger als 2 Gew.-% anorganische Partikel. Besonders bevorzugt ist es, erfindungsgemäßen wässrigen Dispersionen keine anorganischen Partikel beizumischen.

In einer Ausführungsform der vorliegenden Erfindung enthalten erfindungsgemäße wässrige Dispersionen 5 bis 30, bevorzugt mindestens 10 Gew.-% erfindungsgemäße Partikel, gegebenenfalls 1 bis 20, bevorzugt mindestens 3 Gew.-% filmbildendes Polymer, 0,05 bis 5, bevorzugt 0,2 bis 2 Gew.-% Verdicker, jeweils bezogen auf gesamte erfindungsgemäße wässrige Dispersion.

In einer Ausführungsform der vorliegenden Erfindung weisen erfindungsgemäße wässrige Dispersionen einen Feststoffgehalt im Bereich von insgesamt 10 bis 50%, bevorzugt 15 bis 40% auf.

Ein weiterer Gegenstand der vorliegenden Erfindung ist die Verwendung von erfindungsgemäßen Partikeln oder von erfindungsgemäßen wässrigen Dispersionen zur Beschichtung von Substraten. Ein weiterer Gegenstand der vorliegenden Erfindung ist ein Verfahren zur Beschichtung von Substraten mit erfindungsgemäßen Partikeln oder mit wässrigen Dispersionen.

Substrate kann man beispielsweise wählen aus Metallen, Glas, Kunststoffen und vorzugsweise aus faserigen Substraten, beispielsweise Papier, Pappe, Kartonagen, Holz, Textil und insbesondere aus Leder und Lederimitaten, wobei der Begriff Lederimitate auch Lefa und Alcantara und der Ausdruck Leder auch Spaltleder mit umfasst. Dabei wird unter Leder die gegerbte, hydrophobierte und gefettete Haut von toten Tieren verstanden, beispielsweise von Rind, Kalb, Hirsch, Schwein, Ziegen, Kängurus oder Schafen. Leder kann aus Häuten von geschlachteten Tieren hergestellt sein oder aus Häuten von Tieren, die waidmännisch erlegt wurden oder an natürlichen Ursachen gestorben sind, beispielsweise Krankheiten, Unfällen oder Kämpfen mit anderen Tieren.

Dabei ist es im Rahmen der vorliegenden Erfindung unerheblich, ob es sich bei Leder um mit Hilfe von Chrom-Gerbstoffen oder Chrom-freien Gerbmitteln gegerbtes Leder handelt.

Unter Beschichtung ist dabei zu verstehen, dass erfindungsgemäße Partikel die Oberflächentopographie von beschichtetem Substrat beeinflussen und dass sich ein signifikanter Anteil von erfindungsgemäßen Partikeln an der beschichteten Oberfläche befindet. Erfindungsgemäß beschichtete Oberflächen wirken somit extrem matt.

In einer Ausführungsform der vorliegenden Erfindung beschichtet man lediglich die Oberfläche von Substrat, die bei Verwendung von beschichtetem Substrat die Sichtseite ist, und lässt die anderen Oberflächen im Wesentlichen unbeschichtet. Wünscht man beispielsweise Leder erfindungsgemäß zu beschichten, so beschichtet man vorzugsweise die Narbenseite von Leder und lässt die Fleischseite unbeschichtet.

Das erfindungsgemäße Beschichten kann man durch an sich bekannte Methoden durchführen, beispielsweise Rollcoaten (Walzenauftrag), Streichen, Spritzen, sogenanntes "airless Spritzen", Drucken, Kaschieren, Plüschen, Bürsten, Gießen oder Aufsprühen. Nach Aufbringen von erfindungsgemäßen Partikeln kann man trocknen, beispielsweise bei Temperaturen im Bereich von 60 bis 80°C, und anschließend nachbügeln, beispielsweise bei Temperaturen im Bereich von 90 bis 160°C. Man kann auch hydraulisch nachbügeln, beispielsweise bei Temperaturen im Bereich von 70 bis 100°C. Es kommen konventionelle Vorrichtungen zum Bügeln in Frage wie beispielsweise Durchlaufbügelmaschinen.

In einer Ausführungsform der vorliegenden Erfindung bringt man 2 bis 30 g erfindungsgemäße wässrige Dispersion pro m² Substratoberfläche, insbesondere Lederoberfläche auf, wobei man die Menge/m² an wässriger Dispersion an den Verwendungszweck des Substrates, insbesondere Leders anpasst und wobei die Angaben in g/m² jeweils auf den Feststoffanteil der betreffenden erfindungsgemäßen wässrigen Dispersion bezogen sind. So sind für Möbelleder 2 bis 15 g/m² bevorzugt und für Leder für Automobilinnenteile 5 bis 30 g/m².

Ein weiterer Gegenstand der vorliegenden Erfindung ist ein Verfahren zur Herstellung von erfindungsgemäßen Partikeln, im Rahmen der vorliegenden Erfindung auch als erfindungsgemäßes Herstellungsverfahren bezeichnet.

Das Verfahren umfasst die folgenden Schritte:
(a) Umsetzung von mindestens einem polymeren Diol mit einem Überschuss an Diisocyanat gewählt aus aliphatischen und/oder cycloaliphatischen Diisocyanaten und gegebenenfalls mindestens einem weiteren Diol,
(b) Umsetzung mit mindestens einem aliphatischen oder cycloaliphatischen Diamin,
(c) Umsetzung mit mindestens einem Diamin oder Diol, welches mindestens eine ionische oder in wässrigem Medium ionisierbare Gruppe aufweist,
(d) Zugabe von Wasser,
(e) Umsetzung mit mindestens einem wasserdispergierbaren Di- oder Polyisocyanat,
(f) Umsetzung mit mindestens einem aliphatischen Polyamin.

In einer Ausführungsform der vorliegenden Erfindung weisen polymere Diole ein mittleres Molekulargewicht Mₙ von mindestens 500 g/mol auf.

Als polymere Diole sind zwei- oder mehrwertige Polyesterpolyole und Polyetherpolyole zu nennen, wobei die zweiwertigen bevorzugt sind. Als Polyetherpolyole kommen vorzugsweise Polyetherdiole in Betracht, wie sie z. B. durch Bortrifluorid katalysierte Verknüpfung von Ethylenoxid, Propylenoxid, Butylenoxid, Tetrahydrofuran, Styroloxid oder Epichlorhydrin mit sich selbst oder untereinander oder durch Anlagerung dieser Verbindungen, einzeln oder im Gemisch, an Starterkomponenten mit reaktionsfähigen Wasserstoffatomen wie Wasser, mehrwertige Alkohole oder Amine wie 1,2-Ethandiol, Propandiol-(1,3), 1,2- oder 2,2-Bis-(4-hydroxyphenyl)propan oder Anilin erhältlich sind, in Betracht. Weiterhin sind Polyether-1,3-Diole, z. B. das an einer OH-Gruppe alkoxylierte Trimethylolpropan, dessen Alkylenoxidkette mit einem 1 bis 18 C-Atome enthaltenden Alkylrest abgeschlossen ist, vorzugsweise eingesetzte polymer Diole.

Bevorzugte polymere Diole sind: Polyethylenglykol, Polypropylenglykol, Polytetrahydrofuran (Poly-THF).

Besonders bevorzugt werden Polyetherpolyole gewählt aus: Polyethylenglykol mit einem mittleren Molekulargewicht (Mₙ) im Bereich von 500 bis 9.000 g/mol, bevorzugt im Bereich von 500 bis 6.000 g/mol, Poly-1,2-propylenglykol oder Poly-1,3-propandiol mit einem mittleren Molekulargewicht (Mₙ) im Bereich von 500 bis 6.000, bevorzugt 600 bis 4.000 g/mol, Poly-THF mit einem mittleren Molekulargewicht (Mₙ) im Bereich von 500 bis 5.000, bevorzugt von 600 bis 3.000 g/mol, besonders bevorzugt im Bereich von 750 bis 2.500 g/mol.

Andere bevorzugte polymere Diole sind Polyesterpolyole (Polyesterdiole) und Polycarbonatdiole.

Als Polyesterpolyole kommen vor allem die an sich bekannten Umsetzungsprodukte von mehrwertigen Alkoholen mit mehrbasigen Carbonsäuren in Betracht, wobei die alkoholische Komponente im Überschuss eingesetzt wird. Mehrbasige Carbonsäuren können aliphatischer, cycloaliphatischer, aromatischer, heterocyclischer oder ethylenisch ungesättigter Natur sein sowie gegebenenfalls Halogenatome als Substituenten tragen. Anstelle von mehrbasigen Carbonsäuren können auch deren Anhydride verestert werden. Bevorzugt sind Polyesterpolyole aus Diolen und Dicarbonsäuren. Als Beispiele für geeignete mehrbasige Carbonsäuren seien genannt: Bernsteinsäure, Adipinsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, endo-Methylentetrahydrophthalsäureanhydrid, Glutarsäureanhydrid, Maleinsäure, Maleinsäureanhydrid oder Fumarsäure. Als im Überschuss einzusetzende mehrwertige Alkohole seien genannt:
1,2-Ethandiol, 1,2-Propandiol, 1,3-Propandiol, 1,2-Butandiol, 1,3-Butandiol, 1,4-Butandiol, 1,4-But-2-endiol, 1,4-But-2-indiol, 1,5-Pentandiol und seine Stellungsisomeren, 1,6-Hexandiol, 1,8-Oktandiol, 1,4-Bishydroxymethylcyclohexan, 2,2-bis-(4-hydroxycyclohexyl)propan, 2-Methyl-1,3-propandiol, 2,2-Dimethylpropan-1,3-diol (Neopentylglykol), Glycerin, 1,1,1-Trimethylolpropan ("TMP"), 1,1,1-Trimethylolethan, 1,2,6-Hexantriol, 1,2,4-Butantriol, Diethylenglykol, Triethylenglykol, Tetraethylenglykol, Polyethylenglykol mit einem mittleren Molekulargewicht (Mₙ) im Bereich von 375 bis 900 g/mol, bevorzugt von 375 bis 700 g/mol, Poly-1,2-propylenglykol oder Poly-1,3-propandiol mit einem mittleren Molekulargewicht (Mₙ) im Bereich von 134 bis 1200 g/mol, bevorzugt im Bereich von 134 bis 900 g/mol, Poly-THF mit einem mittleren Molekulargewicht (Mₙ) im Bereich von 162 bis 2000 g/mol, bevorzugt im Bereich von 375 bis 1500 g/mol, besonders bevorzugt 375 bis 700 g/mol.

In einer Ausführungsform der vorliegenden Erfindung setzt man als Polyesterdiol einen Polyester ein, der aus mindestens zwei verschiedenen Dicarbonsäuren und mindestens einem mehrwertigen Alkohol hergestellt wird. In einer Ausführungsform der vorliegenden Erfindung setzt man als Polyesterdiol einen Polyester ein, der aus einer Dicarbonsäure und mindestens zwei verschiedenen mehrwertigen Alkoholen hergestellt wird. In einer weiteren Ausführungsform der vorliegenden Erfindung setzt man als Polyesterdiol einen Polyester ein, der aus mindestens zwei Dicarbonsäuren und mindestens zwei mehrwertigen Alkoholen hergestellt ist.

Ferner eignen sich als Polyesterpolyole die Anlagerungsprodukte von Lactonen bzw. Lactongemischen an als Startermoleküle eingesetzte zweiwertige Alkohole. Beispiele für bevorzugte Lactone sind ε-Caprolacton, δ-Valerolacton, β-Propiolacton, γ-Butyrolacton oder Methyl-ε-caprolacton. Geeignete Startermoleküle sind insbesondere die bereits als Aufbaukomponenten für die Polyesterpolyole genannten niedermolekularen zweiwertigen Alkohole, insbesondere 1,2-Ethandiol, 1,2-Propandiol, 1,3-Propandiol, 1,2-Butandiol, 1,3-Butandiol, 1,4-Butandiol, 1,4-But-2-endiol, 1,4-But-2-indiol, 1,2-Pentandiol, 1,5-Pentandiol und seine Stellungsisomeren, 1,2-Hexandiol, 1,6-Hexandiol, 1,8-Oktandiol, 1,4-Bishydroxymethylcyclohexan, 2,2-Bis-(4-hydroxycyclohexyl)propan, 2-Methyl-1,3-propandiol, Neopentylglykol, Diethylenglykol, Triethylenglykol und Tetraethylenglykol.

In einer Ausführungsform der vorliegenden Erfindung wählt man Polycarbonatdiole aus solchen, die man z.B. aus Phosgen oder Diphenylcarbonat und einem Überschuss an mindestens einem der als Aufbaukomponenten für die vorstehend genannten Polyesterpolyole genannten niedermolekularen zweiwertigen Alkohole erhalten kann.

In einer Ausführungsform der vorliegenden Erfindung weist Polyesterdiol bzw. Polycarbonatdiol ein mittleres Molekulargewicht Mₙ im Bereich von 500 und 5.000 g/mol, bevorzugt im Bereich von 800 bis 3.000 g/mol auf.

Reaktionspartner in Schritt (a) ist Diisocyanat, im Folgenden auch Diisocyanat (A) genannt, und zwar im Überschuss an Isocyanatgruppen, bezogen auf die Summe aus Hydroxylgruppen von polymerem Diol und Aminogruppen von Diamin (B) und Diamin (C) bzw. Diol (C).

In einer Ausführungsform der vorliegenden Erfindung schließt der Begriff Diisocyanat (A) auch Polyisocyanate mit ein.

In einer Ausführungsform der vorliegenden Erfindung liegt der Überschuss von Isocyanatgruppen, bezogen auf die Summe aus Hydroxylgruppen von polymerem Diol und gegebenenfalls weiterem Diol, im Bereich von NCO/(OH+NH) 2 zu 1 bis 1,1 zu 1, bevorzugt 1,5 zu 1 bis 1,15 zu 1.

Diisocyanate (A) werden gewählt aus aliphatischen und cycloaliphatischen Diisocyanaten. Beispiele sind Tetramethyxy-lylendiisocyanate (TMXDI), Hexamethylendiisocyanat (HDI), Trimethylhexandiisocyanat, 1-Isocyanato-3,3,5-trimethyl-5-isocyanatomethylcyclohexan (Isophoro-diisocyanat, IPDI) sowie davon abgeleitete Carbodiimid-, Allophanat-, Isocyanurat-, Urethan- oder Biuretgruppen aufweisende Polyisocyanate. Besonders bevorzugt sind Hexamethylendiisocyanat (HDI) und Isophorondiisocyanat (IPDI).

In einer Ausführungsform der vorliegenden Erfindung kann man neben Diisocyanat (A) ein oder mehrere Monoisocyanate einsetzen, beispielsweise Phenylisocyanat. Es ist jedoch bevorzugt, nur wenig, beispielsweise 1 bis 5 mol-% Monoisocyanat, bezogen auf Diisocyanat (A) einzusetzen. Besonders bevorzugt ist es, kein Monoisocyanat einzusetzen.

In einer Ausführungsform der vorliegenden Erfindung setzt man in Schritt (a) zusätzlich zu polymerem Diol mindestens ein weiteres Diol ein. Bei weiterem Diol kann es sich vorzugsweise um niedermolekulares Diol handeln, beispielsweise mit einem Molekulargewicht im Bereich von 50 bis 499 g/mol. Geeignete weitere Diole für Schritt (a) sind gewählt aus 1,2-Ethandiol, 1,2-Propandiol, 1,3-Propandiol, 1,2-Butandiol, 1,3-Butandiol, 1,4-Butandiol, 1,4-But-2-endiol, 1,4-But-2-indiol, 1,5-Pentandiol und seine Stellungsisomeren, 1,6-Hexandiol, 1,8-Oktandiol, 1,4-Bishydroxymethylcyclohexan, 2,2-Bis-(4-hydroxycyclohexyl)propan, 2-Methyl-1,3-propandiol, Neopentylglykol, Diethylenglykol, Triethylenglykol, Tetraethylenglykol, Dipropylenglykol und Tripropylenglykol.

In einer Ausführungsform der vorliegenden Erfindung setzt man in Schritt (a) 0,1 bis 10 mol weiteres Diol pro Mol polymerem Diol ein, bevorzugt sind 0,2 bis 5 mol.

In einer Ausführungsform der vorliegenden Erfindung setzt man in Schritt (a) zusätzlich zu polymerem Diol und Diisocyanat (A) mindestens ein Triol oder mindestens einen Alkohol mit mindestens 4 Hydroxylgruppen pro Molekül ein. Beispiele sind Glycerin, 1,2,4-Butantriol, 1,1,1-Trimethylolethan, 1,1,1-Trimethylolpropan und 1,1,1-Trimethylolbutan.

In einer Ausführungsform der vorliegenden Erfindung setzt man in Schritt (a) zusätzlich zu polymerem Diol und Diisocyanat (A) 0,1 bis 10 Gew.-% Triol oder Alkohol mit mindestens 4 Hydroxylgruppen pro Molekül ein, bezogen auf polymeres Diol.

In einer Ausführungsform der vorliegenden Erfindung setzt man in Schritt (a) zusätzlich zu polymerem Diol und Diisocyanat (A) mindestens ein Monoalkylpolyalkylenoxid ein. Monoalkylpolyalkylenoxide sind üblicherweise durch Alkoxylierung von niedermolekularen einwertigen Startermolekülen, insbesondere von C₁-C₁₀-Alkanolen, wie Methanol, Ethanol oder n-Butanol erhältlich, wobei als Alkoxylierungsmittel vorzugsweise Ethylenoxid oder Gemische von Ethylenoxid mit anderen Alkylenoxiden, insbesondere Propylenoxid, eingesetzt werden. Im Falle einer Alkoxylierung mit Alkylenoxidgemischen enthalten diese mit Vorteil wenigstens 40, mit besonderem Vorteil wenigstens 65 mol-% Ethylenoxid, bezogen auf Alkylenoxid. Eingesetztes Monoalkylpolyalkylenoxid weist vorzugsweise ein zahlenmittleres Molekulargewicht von 500 bis 10.000 g/mol auf, besonders bevorzugt von 1.000 bis 5.000 g/mol.

In einer Ausführungsform der vorliegenden Erfindung setzt man in Schritt (a) im Bereich von 0,01 bis 10 mol-% Monoalkylpolyalkylenoxid ein, bezogen auf polymeres Diol.

Setzt man in Schritt (a) neben polymerem Diol weiteres Diol, Triol, Monoalkylpolyalkylenoxid und/oder Alkohol mit mindestens 4 Hydroxylgruppen pro Molekül ein, so bezieht sich der Ausdruck "Überschuss" auf die Summe aller Hydroxylgruppen der Reaktionspartner von Diisocyanat (A).

Die Umsetzung in Schritt (a) führt man vorzugsweise in einem Lösungsmittel oder Lösungsmittelgemisch durch. Bevorzugte Lösungsmittel sind organische Lösungsmittel, beispielsweise Ether, Ketone oder aromatische Kohlenwasserstoffe. Geeignete Lösungsmittel sind vorzugsweise aprotisch. Geeignet sind beispielsweise Aceton, Tetrahydrofuran, Butanon, Diethylketon, Methylisobutylketon (MIBK), Methylethylketon (MEK), cyclische oder offenkettige organische Carbonate, beispielsweise Diethylcarbonat, oder N-Alkylpyrrolidon, insbesondere N-Methylpyrolidon oder N-Ethylpyrrolidon. Weiterhin sind Dimethylformamid, Dimethylacetamid und Diethylformamid geeignet.

In einer Ausführungsform der vorliegenden Erfindung führt man die Umsetzung in Schritt (a) bei Temperaturen von 20 bis 160, bevorzugt 50 bis 100°C durch.

In einer Ausführungsform der vorliegenden Erfindung leitet man die Umsetzung in Schritt (a) so ein, dass man polymerem Diol und Diisocyanat (A) sowie gegebenenfalls weitere Reaktionspartner wie Monoalkylpolyethylenglykol miteinander und gegebenenfalls mit Lösungsmittel und/oder Katalysator vermischt. Dabei kann man verschiedene Reaktionspartner wie polymeres Diol und Diisocyanat (A) und auch Lösungsmittel in einer oder in mehreren Portionen zugeben. Das Vermischen kann beispielsweise durch Verrühren erfolgen.

In einer Ausführungsform der vorliegenden Erfindung beträgt Reaktionsdauer in Schritt (a) im Bereich von einer bis 24 Stunden, bevorzugt 2 bis 10 Stunden.

Vorzugsweise führt man die Umsetzung in Schritt (a) in Gegenwart eines Katalysators um. Als Katalysator sind an sich bekannte Katalysatoren aus der Polyurethanchemie geeignet, beispielsweise zinnorganische Verbindungen wie Dibutylzinndilaurat oder Ester der Titansäure wie Tetra-n-butylorthotitanat. Besonders gut geeignete Katalysatoren sind Carbonsäuresalze von Alkalimetallen, insbesondere Monocarbonsäuresalze von Alkalimetallen. Ganz besonders bevorzugt sind Rubidiumacetat und Cäsiumacetat. Geeignete Mengen sind beispielsweise Mengen von 10 bis 100 ppm, bezogen auf die lösungsmittelfreie Reaktionsmischung von Diisocyanat.

Carbonsäuresalze von Alkalimetallen kann man in fester Form, bevorzugt jedoch in gelöster Form zusetzen. Als Lösemittel sind polare aprotische Lösemittel oder auch protische Lösemittel geeignet. Beispiele für geeignete Lösungsmittel sind Alkohole; ganz besonders geeignet sind Polyole, wie sie auch als Bausteine für Polyurethane verwendet werden, wie z.B. Ethan-, Propan- und Butandiole.

In Schritt (b) setzt man mit mindestens einem aliphatischen oder cycloaliphatischen Diamin um, vorzugsweise mit einem Diamin mit zwei primären Aminogruppen pro Molekül, auch Diamin (B) genannt.

In einer Ausführungsform der vorliegenden Erfindung wählt man Diamin (B) aus aliphatischen und vorzugsweise cycloaliphatischen Diaminen. Dabei werden im Rahmen der vorliegenden Erfindung Diamine (B), die eine unmittelbar an einen cyclischen Kohlenwasserstoffrest gebundene Aminogruppe und eine Aminogruppe, die an eine Alkylgruppe oder Alkylengruppe gebunden ist, als cycloaliphatische Diamine (B) bezeichnet. Diamine (B), deren Aminogruppen jeweils an Alkylgruppen oder an Alkylengruppen, die nicht Bestandteil eines Rings sind, gebunden sind, werden hingegen als aliphatische Diamine (B) bezeichnet.

Beispiele für aliphatische Diamine (B) sind Ethylendiamin, 1,3-Propandiamin, 1,6-Diaminohexan und 1,12-Dodecandiamin.

Beispiele für cycloaliphatische Diamine (B) sind 1-Amino-3-aminomethyl-3,5,5-trimethylcyclohexan (Isophorondiamin, IPDA), Cyclohexan-1,4-diamin und 4,4'-Di(aminocyclohexyl)-methan.

In einer Ausführungsform der vorliegenden Erfindung gibt man Diamin (B) zur Reaktionsmischung aus Schritt (a).

Diamin (B) kann man in reiner Form zugeben. Bevorzugt wird jedoch Diamin (B) in einem Lösemittel gelöst zugegeben. Als Lösemittel sind dabei die vorgenannten Lösemittel verwendbar. Bevorzugt werden Aceton, MEK und THF verwendet. Weiterhin ist Wasser als Lösemittel geeignet. Die Lösemittelmenge beträgt 10 bis 1000 Gew.-%, bezogen auf Diamin (B), bevorzugt 50 bis 500 Gew.-%.

In einer Ausführungsform der vorliegenden Erfindung führt man die Umsetzung in Schritt (b) bei Temperaturen von 20 bis 160, bevorzugt 25 bis 80°C durch.

In einer Ausführungsform der vorliegenden Erfindung kann man während Schritt (b) weiteres Diisocyanat zusetzen, welches verschieden oder vorzugsweise gleich Diisocyanat (A) ist.

In Schritt (c) setzt man mit mindestens einem Diamin oder Diol um, im Rahmen der vorliegenden Erfindung auch Diamin (C) bzw. Diol (C) genannt, welches mindestens eine ionische oder in wässrigem Medium ionisierbare Gruppe aufweist.

Vorzugsweise handelt es sich bei Diamin (C) um ein aliphatisches Diamin. Vorzugsweise handelt es sich bei Diol (C) um ein aliphatisches Diol.

In einer Ausführungsform der vorliegenden Erfindung handelt es sich bei ionischen Gruppen um anionische Gruppen. Bevorzugtes Beispiel ist die Sulfonsäuregruppe.

In einer Ausführungsform der vorliegenden Erfindung handelt es sich bei in wässrigem Medium ionisierbaren Gruppen um Gruppen, die in wässrigem Medium beispielsweise bei pH-Werten im Bereich von 7 oder darüber ein Proton abspalten können. Besonders bevorzugt ist die Carbonsäuregruppe.

In einer Ausführungsform der vorliegenden Erfindung liegt Diamin (C) bzw. Diol (C) als freie Säure vor. In einer anderen Ausführungsform der vorliegenden Erfindung liegt Diamin (C) bzw. Diol (C) als Salz vor. Als Gegenionen sind beispielsweise die Kationen von Alkalimetallen geeignet, bevorzugt K⁺ und insbesondere Na⁺. Weitere geeignete Gegenionen sind die Kationen von tertiären Aminen, beispielsweise die Kationen von Tri-C₁-C₁₀-alkylaminen und die Kationen von tertiären Ethanolaminen wie beispielsweise Kationen von N-C₁-C₄-Alkyldiethanolaminen, von N,N-Di-C₁-C₄-alkylethanolamin und von Triethanolamin.

Beispiele für geeignete Diamine (C) sind N-(2-Aminoethyl)-2-aminoethancarbonsäure und N-(2-Aminoethyl)-2-aminoethansulfonsäure bzw. deren Alkalimetallsalze, insbesondere Natriumsalze.

Beispiele für geeignete Diole (C) sind 1,1-Dimethylolpropionsäure, 1,1-Dimethylolbuttersäure und Weinsäure.

In einer Ausführungsform der vorliegenden Erfindung setzt man Diamin (C) bzw. Diol (C) in solchen Mengen ein, dass organisches Polymer im Bereich von 30 bis 150 mmol/kg, bezogen auf die Gesamtmasse des organischen Polymers, Diamin (C) bzw. Diol (C) eingebaut enthält, bevorzugt 50 bis 120, besonders bevorzugt 50 bis 100 mmol/kg.

In einer Ausführungsform der vorliegenden Erfindung gibt man Diamin (C) bzw. Diol (C) zur Reaktionsmischung aus Schritt (b).

In einer Ausführungsform der vorliegenden Erfindung kann man während Schritt (c) weiteres Diisocyanat zusetzen, welches verschieden oder vorzugsweise gleich Diisocyanat (A) ist.

In einer Ausführungsform der vorliegenden Erfindung führt man die Umsetzung in Schritt (c) bei Temperaturen von 20 bis 160, bevorzugt 25 bis 80°C durch.

Die Umsetzung in Schritt (a), (b) bzw. (c) kann man jeweils bei Normaldruck oder bei erhöhtem Druck durchführen, beispielsweise bei 1,1 bis 10 bar. Bevorzugt ist Normaldruck.

In einer Ausführungsform der vorliegenden Erfindung kann man während Schritt (b) und/oder während Schritt (c) Lösungsmittel zusetzen, das gleich oder verschieden zu in Schritt (a) eingesetztem Lösungsmittel ist. Vorzugsweise handelt es sich bei in Schritt (b) und/oder Schritt (c) zugesetztem Lösungsmittel um polares aprotisches Lösungsmittel, insbesondere um Keton wie beispielsweise Aceton, Methylethylketon, Methylisobutylketon (MIBK) oder Diethylketon.

In Schritt (d) gibt man Wasser zu.

Nach der Wasserzugabe kann man das eingesetzte Lösungsmittel entfernen, beispielsweise durch Destillation. In einer anderen Ausführungsform der vorliegenden Erfindung entfernt man das eingesetzte Lösungsmittel erst nach Schritt (f), der weiter unten beschrieben wird.

In einer Ausführungsform der vorliegenden Erfindung mischt man während der Zugabe von Wasser kräftig, beispielsweise durch Rühren.

In einer Ausführungsform der vorliegenden Erfindung mischt man während der Zugabe von Wasser und dem Entfernen von Lösungsmittel kräftig, beispielsweise durch Rühren.

Die zugegebene Wassermenge in Schritt (d) wird üblicherweise so bemessen, dass die die abschließend, insbesondere nach Schritt (f) (s.u.) erhältliche wässrige Dispersion einen Feststoffgehalt von 5 bis 60 Gew.-% aufweist.

Im Schritt (e) setzt man mit mindestens einem wasserdispergierbaren Di- oder bevorzugt Polyisocyanat um, im Folgenden auch kurz Polyisocyanat (E) genannt.

In einer Ausführungsform der vorliegenden Erfindung wählt man Polyisocyanat (E) aus Isocyanuraten, Biureten oder Allophanaten von aliphatischen Diisocyanaten wie Hexamethylendiisocyanat (HDI) oder Isophorondiisocyanat (IPDI), die mit einer hydrophilen Verbindung, beispielsweise einem C₁-C₄-Alkylether von Polyethylenglykol, beispielsweise mit Polyethylenglykolmonomethylether mit einem zahlenmittleren Molekulargewicht im Bereich von 500 bis 10.000 g/mol, bevorzugt bis 2.000 g/mol umgesetzt sind.

In einer Ausführungsform der vorliegenden Erfindung wählt man Polyisocyanat (E) aus Isocyanuraten, Biureten oder Allophanaten von aliphatischen Diisocyanaten wie HDI oder IPDI, die mit einer hydrophilen Verbindung, beispielsweise einem Polyethylenglykol, beispielsweise mit einem Polyethylenglykol mit einem zahlenmittleren Molekulargewicht im Bereich von 250 bis 10.000 g/mol, bevorzugt im Bereich von 1.000 bis 5.000 g/mol und anschließend mit einem weiteren Diisocyanat, beispielsweise TDI, IPDI oder HDI umgesetzt sind.

In einer Ausführungsform der vorliegenden Erfindung wählt man Polyisocyanat (E) aus Isocyanuraten, Biureten oder Allophanaten von aliphatischen Diisocyanaten wie Hexamethylendiisocyanat (HDI) oder Isophorondiisocyanat (IPDI), die mit einem Urethan aus einem Diisocyanat wie TDI oder IPDI und einer hydrophilen Verbindung, beispielsweise einem C₁-C₂₀-Alkylether von Polyethylenglykol, beispielsweise mit Polyethylenglykolmonomethylether mit einem zahlenmittleren Molekulargewicht im Bereich von 500 bis 10.000 g/mol, bevorzugt bis 2.000 g/mol, gemischt oder umgesetzt sind.

In einer Ausführungsform der vorliegenden Erfindung setzt man 0 bis 20 Gew.-%, vorzugsweise 0,1 bis 15 Gew.-%, bezogen auf die Gesamtmasse des Polymeren, an Polyisocyanat (E) ein.

Im Schritt (f) setzt man mit mindestens einem aliphatischen oder cycloa-liphatischen Polyamin um. Als aliphatischen oder cycloaliphatische Polyamine werden im Rahmen der vorliegenden Anmeldung aliphatische oder cycloaliphatische Diamine, aliphatische oder cycloaliphatische Triamine und aliphatischen oder cycloaliphatische Verbindungen mit 4 oder mehr Aminogruppen pro Molekül bezeichnet, bevorzugt sind aliphatische oder cycloaliphatische Verbindungen mit zwei oder drei Aminogruppen pro Molekül. Beispiele für geeignete aliphatische und cycloaliphatische Polyamine sind Diethylentriamin, Triethylentetramin, Isophorondiamin und Hexamethylendiamin.

In einer Ausführungsform der vorliegenden Erfindung wählt man die Menge an Polyamin in Schritt (f) so, dass pro Mol Isocyanatgruppen aus Diisocyanat (A) 0,01 bis 0,5, bevorzugt 0,01 bis 0,4 mol Aminogruppen aus aliphatischem oder cycloaliphatischem Polyamin eingesetzt werden.

Die Reihenfolge der Schritte (a) bis (f) des erfindungsgemäßen Herstellungsverfahrens lässt sich in gewissen Grenzen variieren. Dabei ist darauf zu achten, dass man Schritt (a) vor Schritt (d) durchführt.

In einer bevorzugten Ausführungsform der vorliegenden Erfindung führt man das erfindungsgemäßen Herstellungsverfahrens so durch, dass man die Schritte in der folgenden Reihenfolge ausführt: Schritt (a), Schritt (b), Schritt (c), Schritt (d), Schritt (e), Schritt (f).

In einer anderen bevorzugten Ausführungsform der vorliegenden Erfindung führt man das erfindungsgemäße Herstellungsverfahren so durch, dass man die Schritte in der folgenden Reihenfolge ausführt: Schritt (a), Schritt (c), Schritt (b), Schritt (d), Schritt (e), Schritt (f).

In einer anderen bevorzugten Ausführungsform der vorliegenden Erfindung führt man das erfindungsgemäßen Herstellungsverfahrens so durch, dass man die Schritte in der folgenden Reihenfolge ausführt: Schritt (a), Schritt (b), Schritt (c), Schritt (d), Schritt (f), Schritt (e).

In einer anderen bevorzugten Ausführungsform der vorliegenden Erfindung führt man das erfindungsgemäße Herstellungsverfahren so durch, dass man die Schritte in der folgenden Reihenfolge ausführt: Schritt (a), Schritt (c), Schritt (b), Schritt (d), Schritt (f), Schritt (e).

In einer anderen Ausführungsform der vorliegenden Erfindung führt man das erfindungsgemäße Herstellungsverfahren so durch, dass man die Schritte in der folgenden Reihenfolge ausführt: Schritt (a), Schritt (c), Schritt (d), Schritt (b), Schritt (f), Schritt (e).

In einer anderen Ausführungsform der vorliegenden Erfindung führt man das erfindungsgemäße Herstellungsverfahren so durch, dass man die Schritte in der folgenden Reihenfolge ausführt: Schritt (a), Schritt (c), Schritt (d), Schritt (b), Schritt (e), Schritt (f).

Durch die Ausführung des erfindungsgemäßen Herstellungsverfahrens erhält man erfindungsgemäße wässrige Dispersionen.

In einer Ausführungsform der vorliegenden Erfindung kann man erfindungsgemäße Partikel aus erfindungsgemäßen wässrigen Dispersionen isolieren, beispielsweise durch Filtrieren oder durch Verdampfen des Wassers, insbesondere durch Sprühtrocknen. In vielen Fällen zieht man es jedoch vor, erfindungsgemäße wässrige Dispersionen - gegebenenfalls mit Zuschlagstoffen versehen - ohne weitere Isolierung der erfindungsgemäßen Partikel zum Beschichten von Substraten einzusetzen.

Ein weiterer Gegenstand der vorliegenden Erfindung sind Substrate, beschichtet mit erfindungsgemäßen Partikeln. Bevorzugt handelt es sich bei erfindungsgemäßen beschichteten Substraten um faserige Substrate, insbesondere um Leder oder Lederimitate. Erfindungsgemäße beschichtete Substrate, insbesondere erfindungsgemäß beschichtete Leder weisen eine besonders starke Mattierung auf und eignen sich deshalb besonders gut für Automobilinnenteile, entweder als solche oder als Komponente. Außerdem weisen sie einen besonders angenehmen Griff auf.

Die Erfindung wird durch Arbeitsbeispiele erläutert.

### I. Herstellung von erfindungsgemäßen Partikeln

### I.1 Herstellung von erfindungsgemäßen Partikeln P.1 in Form von erfindungsgemäßer wässriger Dispersion D.1

In einem 3-I-Kolben mit Rührer, Thermometer und Rückflusskühler wurden 400 g (0,20 mol) Poly-THF mit einem zahlenmittleren Molekulargewicht von 2.000 g/mol, 2,25 g eines auf n-Butanol gestarteten Polyethylenoxids mit einem zahlenmittleren Molekulargewicht von 3.000 g/mol, 110 g Aceton und 0,2 g einer 10 Gew.-% Lösung von Cäsiumacetat in Butandiol-1,4 vorgelegt und auf 50 °C erhitzt. Dazu wurden 112,6 g (0,67 mol) HDI gegeben und bei 77°C 150 Minuten lang gerührt. Anschließend wurde mit 840 g Aceton verdünnt und auf 30°C abgekühlt. Der NCO-Gehalt wurde titrimetrisch zu 2,70 Gew.-% bestimmt (berechnet: 2,68 Gew.-%). Zu der Reaktionsmischung wurden weitere 4,75 g HDI gegeben und 5 Minuten gerührt. Dann wurde eine Lösung von 51,0 g (0,30 mol) Isophorondiamin (IPDA), gelöst in 50 g Wasser, zugegeben und 5 Minuten gerührt. Danach wurden 20,5 g PUD-Salz (Natriumsalz von N-(2-Aminoethyl)-2-aminoethancarbonsäure) gegeben und 5 Minuten gerührt. Hernach wurde 750 g Wasser zugesetzt und anschließend 120 g einer 50 Gew.-% Emulsion eines wasseremulgierbaren modifizierten trimeren Hexamethylendiisocyanats nach DE 40 36 927 A1, Beispiel 4 zugefügt.

Nach 5 Minuten wurde eine Lösung von 21,0 g (0,12 mol) IPDA und 8,2 g (0,08 mol) Diethylentriamin (DETA) in 65 g Wasser zugegeben. Anschließend wurde das Aceton unter vermindertem Druck abdestilliert. Man erhielt erfindungsgemäße wässrige Dispersion (D.1) mit 40 Gew.-% Feststoffgehalt.

Die volumenbezogenen Partikeldurchmesserverteilung wurde mit Hilfe von Laserbeugung in einem Mastersizer S der Fa. Malvern bestimmt. Es wurde gefunden:
der Durchmesser von insgesamt 10% der Partikel war kleiner als 6 µm,
der Durchmesser von insgesamt 50% der Partikel war kleiner als 12,5 µm,
der Durchmesser von insgesamt 90% der Partikel war kleiner als 21 µm.
Partikel mit einem Durchmesser größer als 24 µm waren nicht detektierbar.

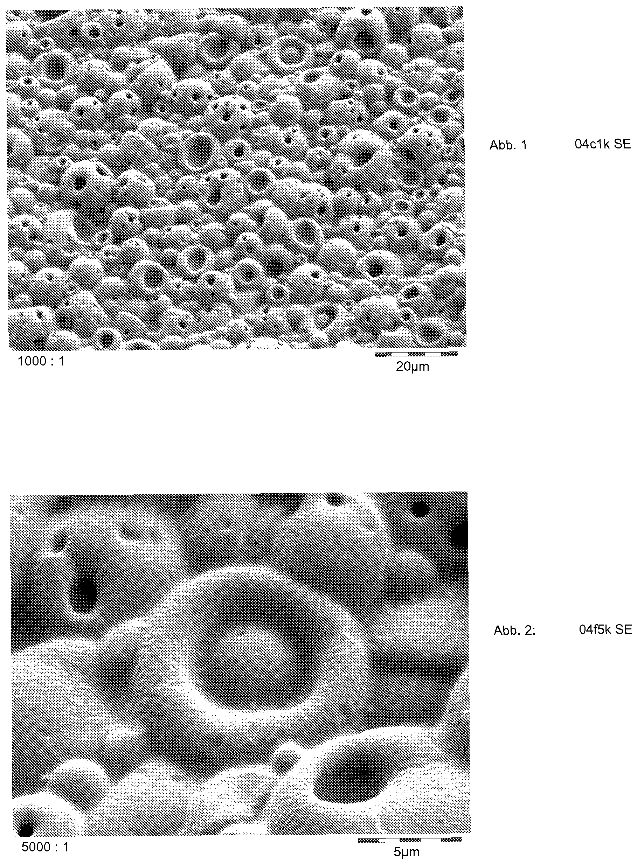

Eine elektronenmikroskopische Aufnahme von erfindungsgemäßen Partikeln P.1 (auf Leder L.1) findet sich in Abbildung 1.

### I.2 Herstellung von erfindungsgemäßen Partikeln P.2 in Form von erfindungsgemäßer wässriger Dispersion D.2

In einem 3-I-Kolben mit Rührer, Thermometer und Rückflusskühler wurden 400 g (0,20 mol) PTHF mit einem zahlenmittleren Molekulargewicht von 2.000 g/mol, 1,50 g eines auf n-Butanol gestarteten Polyethylenoxids mit einem zahlenmittleren Molekulargewicht von 3.000 g/mol, 3,0 g 1,1,1-Trimethylolpropan, 100 g Aceton und 0,2 g einer 10 Gew.-% Lösung von Cäsiumacetat in Butandiol-1,4 vorgelegt und auf 50 °C erhitzt. Dazu wurden 118,2 g (0,704 mol) HDI gegeben und bei 77°C 150 Minuten lang gerührt. Anschließend wurde mit 850 g Aceton verdünnt und auf 30°C gekühlt. Der NCO-Gehalt wurde titrimetrisch zu 2,70 Gew.-% bestimmt (berechnet: 2,69 Gew.-%). Dann wurde eine Lösung von 51,0 g (0,30 mol) IPDA in 50 g Wasser zugegeben und 5 Minuten gerührt. Danach wurden 20,5 g PUD-Salz zugegeben und 5 Minuten gerührt. Hernach wurden 750 g Wasser zugesetzt und anschließend 120 g einer 50 Gew.-% Emulsion eines wasseremulgierbaren modifizierten trimeren Hexamethylendiisocyanats nach DE 40 36 927 A1, Beispiel 4 zugefügt.

Nach 5 Minuten wurde eine Lösung von 21,0 g (0,12 mol) IPDA und 8,2 g (0,08 mol) Diethylentriamin (DETA) in 65 g Wasser zugegeben. Anschließend wurde das Aceton unter vermindertem Druck abdestilliert. Man erhielt erfindungsgemäße wässrige Dispersion (D.2) mit 40 Gew.-% Feststoffgehalt.

Die volumenbezogenen Partikeldurchmesserverteilung wurde mit Hilfe von Laserbeugung in einem Mastersizer S der Fa. Malvern bestimmt. Es wurde gefunden:
der Durchmesser von insgesamt 10% der Partikel war kleiner als 5 µm,
der Durchmesser von insgesamt 50% der Partikel war kleiner als 8 µm,
der Durchmesser von insgesamt 90% der Partikel war kleiner als 13 µm.

Partikel mit einem Durchmesser größer als 20 µm waren nicht detektierbar.

### II. Beschichtung von Leder

### II.1 Herstellung von Beschichtungsformulierungen, Zusätze

Allgemeine Arbeitsvorschrift: Je 100 g der erfindungsgemäßen wässrigen Dispersion aus Beispiel I.1 bzw. I.2 wurden mit Zusätzen (s.u.) vermischt und mit Wasser auf 250 ml aufgefüllt. Mit Verdicker-Lösung aus II. wurde die Viskosität auf 28 s Auslaufzeit gemäß DIN 53211/4 mm eingestellt. Man erhielt anwendungsfertige Spritzflotten gemäß Tabelle 1.

**Tabelle 1: Zusammensetzungen von Spritzflotten SPF.1 und SPF.2**

| Inhaltsstoff | SPF.1 | SPF.2 |
|---|---|---|
| Dispersion aus I.1 | 100 g | - |
| Dispersion aus I.2 | - | 100 g |
| Zusatz 1 | 15 g | 15 g |
| Zusatz 2 | 12 g | 12 g |
| Zusatz 3 | 1 g | 1 g |
| Destilliertes Wasser | Auf 250 ml auffüllen | Auf 250 ml auffüllen |
| Verdickerlösung | Auslaufzeit 28 s einstellen | Auslaufzeit 28 s einstellen |

Zusätze pro 100 g erfindungsgemäßer wässriger Dispersion aus I.1 oder I.2:
Zusatz 1: 15 g einer 70 Gew.-% Emulsion eines wasseremulgierbaren Hexamethylendiisocyanats nach EP 0 697 424, Beispiel 2,
Zusatz 2: 12 g einer 40 Gew.-% wässrigen Dispersion eines Polydimethylsiloxans (Dimethylpolysiloxans) und eines ethoxylierten Tridecanols (1:1)
Zusatz 3: 1 g einer Mischung von Polyethylenglykol und ethoxyliertem H(OCH₂CH₂)₃-O-(CH₂)₃-Si(CH₃)[OSi(CH₃)₃]₂ und ethoxyliertem Tridecanol (1:1)

Als Verdicker-Lösung wurde jeweils eine wässrige Formulierung eingesetzt, enthaltend:
40 Gew.-% eines Polyurethans, hergestellt aus Ethylenglykol und Trimethylhexamethylendiisocyanat
20 Gew.-% Diethylenglykol-mono-n-butylether ("Butyldiglykol")
40 Gew.-% Wasser

### II.2 Beschichtung von Leder

Einheitlich grundiertes Cr-gegerbtes Rindsleder wurde in 2 Spritzaufträgen der betreffenden Spritzflotte mit Zwischentrocknung appliziert. Dazu wurden je ein Spritzauftrag à 1,4 und 1,2 g/DIN A 4-Stück appliziert und jeweils 10 min bei 80°C im Umlufttrockenschrank getrocknet. Man erhielt die erfindungsgemäßen beschichteten Leder L.1 bis L.4.

Bewertet wurden folgende Eigenschaften der erfindungsgemäßen Leder L.1 und L.2: Glanz, gemessen mit Glanzmessgerät Fa. Lange, bei 60° und 85° Winkel, Rückpolierbarkeit, also Glanzmessung nach 2.000x Trockenreibungen mit VESLIC Reibechtheitstester,
Optik, speziell Schwarztiefe bei schwarzen Ledern mittels Cielab-Skala (dL-Werte), Haptik, manuell.

Erfindungsgemäße Leder zeigten insbesondere nach einem solchen Trockenreibvorgang wesentlich niedrigere Glanzwerte als die Vergleichsversuche und somit eine geringere Differenz im Glanz nach/vor Trockenreibung. Je geringer der Glanz, desto geringer die Rückpolierbarkeit.

Der Glanzgrad betrug bei 60°: 0,3%, Glanzgrad bei 85°: 0,4%.
Glanzgrad nach 2000 Reibungen (trocken): bei 60°: 0,9%; bei 85°: 0,5%, gemessen mit einem Glanzmessgerät REFO 3D der Fa. Lange gemäß Bedienungsanleitung.

Die Schwarztiefe wurde im Vergleich zu einem bekannten schwarzen Leder gemessen (hier müsste jetzt eigentlich geschrieben werden, wie gemacht) und zeigte durchweg negative Cielab dl-Werte, also eine schwärzere Koloristik.

Abb. 1 und 2, Aufnahmen von erfindungsgemäßem beschichtetem Leder L.1: Aufnahmemethode: Scanning Electron Microscopy (Rasterelektronenmikroskopie) mit SE (Sekundärelektronen, Abbildungen bei einer Primärstrahlenergie von 2kV).

Abbildungen 1 und 2: rasterelektronenmikroskopische Aufnahmen von erfindungsgemäßem Leder L.1, mattiert mit erfindungsgemäßen Partikeln aus Beispiel I.1.

## Patentansprüche

1. Sphärische Partikel mit einem mittleren Durchmesser (Volumenmittel) im Bereich von 1 bis 100 µm, umfassend mindestens ein organisches Polymer, wobei die Partikel eine oder mehrere offene Poren aufweisen, die einen Durchmesser im Bereich von 1 bis 90% des Partikeldurchmessers und eine Tiefe von mindestens 10% des Partikeldurchmessers aufweisen, worin, dass organisches Polymer gewählt wird aus Polyurethanen, die Harnstoffgruppen aufweisen und die im Wesentlichen unter Verwendung von aliphatischen oder cycloaliphatischen Diisocyanaten hergestellt sind, erhältlich durch das Verfahren nach einem der Ansprüche 10 bis 12.

2. Partikel nach Anspruch 1, **dadurch gekennzeichnet, dass** die Partikel im Mittel im Bereich von 1 bis 25 offene Poren aufweisen.

3. Partikel nach Anspruch 1 oder 2, **dadurch gekennzeichnet, dass** die Poren eine im wesentlichen zylindrische oder konische Form aufweisen.

4. Wässrige Dispersionen, enthaltend sphärische Partikel nach einem der Ansprüche 1 bis 3.

5. Wässrige Dispersionen nach Anspruch 4, **dadurch gekennzeichnet, dass** sie weiterhin Partikel enthalten, die keine Poren mit einem Durchmesser im Bereich von 1 bis 90% des Partikeldurchmessers und eine Tiefe von mindestens 10% des Partikeldurchmessers aufweisen.

6. Wässrige Dispersionen nach Anspruch 4 oder 5, **dadurch gekennzeichnet, dass** sie weiterhin Partikel enthalten, die einen Durchmesser im Bereich von 50 nm bis unter einem Mikrometer aufweisen.

7. Verwendung von sphärischen Partikeln nach mindestens einem der Ansprüche 1 bis 3 oder von wässrigen Dispersionen nach einem der Ansprüche 4 bis 6 zur Beschichtung von Substraten.

8. Verwendung nach Anspruch 7, **dadurch gekennzeichnet, dass** Substrate gewählt werden aus Metall, Glas, Kunststoff und faserige Substrate.

9. Verwendung nach Anspruch 8 **dadurch gekennzeichnet, dass** faserige Substrate gewählt werden aus Papier, Textil, Leder und Lederimitaten.

10. Verfahren zur Herstellung von sphärischen Partikeln mit einem mittleren Durchmesser (Volumenmittel) im Bereich von 1 bis 100 µm, umfassend mindestens ein organisches Polymer, wobei die Partikel eine oder mehrere offene Poren aufweisen, die einen Durchmesser im Bereich von 1 bis 90% des Partikeldurchmessers und eine Tiefe von mindestens 10% des Partikeldurchmessers aufweisen, worin, dass organisches Polymer gewählt wird aus Polyurethanen, die Harnstoffgruppen aufweisen und die im Wesentlichen unter Verwendung von aliphatischen oder cycloaliphatischen Diisocyanaten hergestellt sind oder von wässrigen Dispersionen enthaltend diese sphärische Partikel, umfassend mindestens sechs Schritte:
(a) Umsetzung von mindestens einem polymeren Diol mit einem Überschuss an Diisocyanat gewählt aus aliphatischen und/oder cycloaliphatischen Diisocyanaten und gegebenenfalls mindestens einem weiteren Diol,
(b) Umsetzung mit mindestens einem aliphatischen oder cycloaliphatischen Diamin,
(c) Umsetzung mit mindestens einem Diamin oder Diol, welches mindestens eine ionische oder in wässrigem Medium ionisierbare Gruppe aufweist,
(d) Zugabe von Wasser,
(e) Umsetzung mit mindestens einem wasserdispergierbaren Di- oder Polyisocyanat,
(f) Umsetzung mit mindestens einem aliphatischen Polyamin.

11. Verfahren nach Anspruch 10, **dadurch gekennzeichnet, dass** man als Katalysator in Schritt (a) mindestens ein Alkalimetallsalz einer aliphatischen Carbonsäure einsetzt.

12. Verfahren nach Anspruch 10 oder 11, **dadurch gekennzeichnet, dass** man in Schritt (c) Diamin bzw. Diol in solchen Mengen einsetzt, dass organisches Polymer im Bereich von 30 bis 150 mmol/kg, bezogen seine Gesamtmasse, Diamin (C) bzw. Diol (C) eingebaut enthält.

13. Leder, beschichtet mit sphärischen Partikeln nach einem der Ansprüche 1 bis 3.

14. Verwendung von Leder nach Anspruch 13 für Automobilinnenteile.

## Claims

1. Spherical particles with an average diameter (volume average) in the range of 1 to 100 µm, comprising at least one organic polymer, wherein the particles have one or a plurality of open pores, which have a diameter in the range of 1 to 90% of the particle diameter and a depth of at least 10% of the particle diameter, wherein that organic polymer is selected from polyurethanes, which have urea groups and which are produced substantially by the use of aliphatic or cycloaliphatic di-isocyanates, obtainable by the method according to any one of claims 10 to 12.

2. Particles according to claim 1, **characterised in that** the particles have on average in the range of 1 to 25 open pores.

3. Particles according to claim 1 or 2, **characterised in that** the pores have a substantially cylindrical or conical form.

4. Aqueous dispersions, containing spherical particles according to any one of claims 1 to 3.

5. Aqueous dispersions according to claim 4, **characterised in that** they additionally contain particles, which have no pores with a diameter in the range of 1 to 90% of the particle diameter and a depth of at least 10% of the particle diameter.

6. Aqueous dispersions according to claim 4 or 5, **characterised in that** they additionally contain particles, which have a diameter in the range of 50 nm to less than one micrometer.

7. Use of spherical particles according to at least one of claims 1 to 3 or of aqueous dispersions according to any one of claims 4 to 6 for the coating of substrates.

8. Use according to claim 7, **characterised in that** substrates are selected, which are made from metal, glass, plastic and fibrous substrates.

9. Use according to claim 8, **characterised in that** fibrous substrates are selected made from paper, fabric, leather and imitation leather.

10. Method for producing spherical particles with an average diameter (volume average) in the range of 1 to 100 µm, comprising at least one organic polymer, wherein the particles have one or a plurality of open pores, which have a diameter in the range of 1 to 90% of the particle diameter and a depth of at least 10% of the particle diameter, wherein, that organic polymer is selected from polyurethanes, which have urea groups and which are produced substantially by the use of aliphatic or cycloaliphatic di-isocyanates or aqueous dispersions containing said spherical particles, comprising at least six steps:
(a) Reaction of at least one polymeric diol with an excess of diisocyanate selected from aliphatic and/or cycloaliphatic di-isocyanates and optionally at least one further diol,
(b) Reaction with a least one aliphatic or cycloaliphatic diamine,
(c) Reaction with at least one diamine or diol, which has at least one ionic or group ionisable in an aqueous medium,
(d) Addition of water,
(e) Reaction with at least one water-dispersible di- or poly-isocyanate,
(f) Reaction with at least one aliphatic polyamine.

11. Method according to claim 10, **characterised in that** at least one alkali metal salt of an aliphatic carboxylic acid is used in step (a) as a catalyst.

12. Method according to claim 10 or 11, **characterised in that** in step (c) diamine or diol is used in such quantities, that organic polymer has incorporated in the range of 30 to 150 mmol/kg of diamine (C) or diol (C), based on its total mass.

13. Leather, coated with spherical particles, according to any one of claims 1 to 3.

14. Use of leather according to claim 13 for automobile internal parts.

## Revendications

1. Particules sphériques ayant un diamètre moyen (moyen en volume) dans le domaine de 1 à 100 µm, comprenant au moins un polymère organique, où les particules présentent un ou plusieurs pores ouverts, qui présentent un diamètre dans le domaine de 1 à 90 % du diamètre des particules et une profondeur d'au moins 10 % du diamètre des particules, où, en ce que le polymère organique est choisi parmi les polyuréthanes qui présentent des groupes urée et qui sont produits essentiellement en utilisant des diisocyanates aliphatiques ou cycloaliphatiques, pouvant être obtenues par le procédé selon l'une des revendications 10 à 12.

2. Particules selon la revendication 1, **caractérisées en ce que** les particules présentent en moyenne dans le domaine de 1 à 25 pores ouverts.

3. Particules selon la revendication 1 ou 2, **caractérisées en ce que** les pores présentent une forme sensiblement cylindrique ou conique.

4. Dispersions aqueuses, contenant des particules sphériques selon l'une des revendications 1 à 3.

5. Dispersions aqueuses selon la revendication 4, **caractérisées en ce qu'**elles contiennent en outre des particules qui ne présentent pas de pores ayant un diamètre dans le domaine de 1 à 90 % du diamètre des particules et une profondeur d'au moins 10 % du diamètre des particules.

6. Dispersions aqueuses selon la revendication 4 ou 5, **caractérisées en ce qu'**elles contiennent en outre des particules qui présentent un diamètre dans le domaine de 50 nm à moins d'un micromètre.

7. Utilisation de particules sphériques selon au moins l'une des revendications 1 à 3 ou de dispersions aqueuses selon l'une des revendications 4 à 6 pour le revêtement de substrats.

8. Utilisation selon la revendication 7, **caractérisée en ce que** les substrats sont choisis parmi un métal, le verre, une matière synthétique et les substrats fibreux.

9. Utilisation selon la revendication 8 **caractérisée en ce que** les substrats fibreux sont choisis parmi le papier, un textile, le cuir et les imitations du cuir.

10. Procédé pour fabriquer des particules sphériques ayant un diamètre moyen (moyen en volume) dans le domaine de 1 à 100 µm, comprenant au moins un polymère organique, où les particules présentent un ou plusieurs pores ouverts, qui présentent un diamètre dans le domaine de 1 à 90 % du diamètre des particules et une profondeur d'au moins 10 % du diamètre des particules, où, en ce que le polymère organique est choisi parmi les polyuréthanes qui présentent des groupes urée et qui sont produits essentiellement en utilisant des diisocyanates aliphatiques ou cycloaliphatiques ou des dispersions aqueuses contenant ces particules sphériques, comprenant au moins six étapes :
(a) réaction d'au moins un diol polymère avec un excès de diisocyanate choisi parmi les diisocyanates aliphatiques et/ou cycloaliphatiques et éventuellement au moins un autre diol,
(b) réaction avec au moins une diamine aliphatique ou cycloaliphatique,
(c) réaction avec au moins une diamine ou un diol, qui présente au moins un groupe ionique ou ionisable en milieu aqueux,
(d) addition d'eau,
(e) réaction avec au moins un di- ou polyisocyanate pouvant être dispersé dans l'eau,
(f) réaction avec au moins une polyamine aliphatique.

11. Procédé selon la revendication 10, **caractérisé en ce que** l'on utilise comme catalyseur dans l'étape (a) au moins un sel de métal alcalin d'un acide carboxylique aliphatique.

12. Procédé selon la revendication 10 ou 11, **caractérisé en ce que** l'on utilise dans l'étape (c) une diamine ou un diol en quantités telles que le polymère organique contient la diamine (C) ou le diol (C) incorporé dans le domaine de 30 à 150 mmol/kg, par rapport à sa masse totale.

13. Cuirs, revêtus avec des particules sphériques selon l'une des revendications 1 à 3.

14. Utilisation de cuirs selon la revendication 13 pour des parties internes d'automobiles.
